Europäisches Patentamt

European Patent Office

Office européen des brevets

(11) Numéro de publication: **0 309 334 B1**

## FASCICULE DE BREVET EUROPEEN

(45) Date de publication de fascicule du brevet: **19.11.92** (51) Int. Cl.⁵: **G01N 27/416**

(21) Numéro de dépôt: **88402367.2**

(22) Date de dépôt: **20.09.88**

(54) **Procédé de réalisation de microcavités et application à un capteur électrochimique ainsi qu'à un chromatographe en phase gazeuse.**

(30) Priorité: **22.09.87 FR 8713058**

(43) Date de publication de la demande:
**29.03.89 Bulletin 89/13**

(45) Mention de la délivrance du brevet:
**19.11.92 Bulletin 92/47**

(84) Etats contractants désignés:
**DE ES GB IT NL SE**

(56) Documents cités:
EP-A- 0 047 687    EP-A- 0 052 542
EP-A- 0 104 636    EP-A- 0 140 295
EP-A- 0 144 057    EP-A- 0 203 351
EP-A- 0 218 357    US-A- 4 668 374

(73) Titulaire: **THOMSON-CSF**
**51, Esplanade du Général de Gaulle**
**F-92800 Puteaux(FR)**

(72) Inventeur: **Pribat, Didier**
**THOMSON-CSF SCPI 19, avenue de Messine**
**F-75008 Paris(FR)**
Inventeur: **Perret, Joel**
**THOMSON-CSF SCPI 19, avenue de Messine**
**F-75008 Paris(FR)**
Inventeur: **Rouffy, Jean-Claude**
**THOMSON-CSF SCPI 19, avenue de Messine**
**F-75008 Paris(FR)**
Inventeur: **Velasco, Gonzalo**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

L'invention concerne un procédé de réalisation de microcavités sur un substrat. Elle est applicable à un capteur électrochimique de mesure de concentration d'espèces réactives à temps de réponse réduit et plus particulièrement un capteur réalisé en technologie de type couche mince ou couche épaisse sur substrat isolant électriquement et chimiquement inerte à haute température. Elle concerne également un procédé de réalisation d'un tel capteur.

Elle est également applicable notamment à la réalisation d'un chromatographe en phase gazeuse et plus particulièrement à la colonne de séparation d'un tel chromatographe.

Une des familles bien connues de capteurs électrochimiques fonctionne sur le principe de la pile à concentration et mesure la pression partielle, d'une ou plusieurs espèces du mélange gazeux à analyser. Ce mélange gazeux présent dans un premier compartiment, par exemple un mélange oxygène-gaz inerte, est séparé d'un milieu de référence par la paroi d'un électrolyte solide sont chaque face porte une électrode. Comme il est bien connu, les équations qui régissent le fonctionnement de ces capteurs sont :

- aux interfaces, électrodes/électrolyte:

$$O_2 \rightleftharpoons 2O \xrightleftharpoons[+4e^-]{-4e^-} 2O^{-2} \qquad (1)$$

la tension $V_{E1/E2}$ qui se développe alors entre le électrodes est donnée par la loi de NERNST :

$$V_{E1/E2} = \frac{RT}{4F} \ Ln \ \frac{P_1}{P_2} \qquad (2)$$

avec
R = constante des gaz parfaits = 8,314 J. $(mole.K)^{-1}$
F = nombre de Faraday = 96490 Coulombs
T = température absolue en degrés Kelvin
$P_1$ et $P_2$ = pressions partielles des milieux 1 et 2 dans les compartiments 1 et 2.

Ainsi la connaissance de la température et de l'une des pressions partielles permet de déterminer l'autre pression partielle et cela sans ambiguïté.

Dans le cas où le mélange est réactif, par exemple un mélange $O_2$ + CO, et si l'électrode est un catalyseur de la réaction de ces gax, il se produit la réaction :

$$2\,CO + O_2 \rightleftharpoons 2\,CO_2 \qquad (3)$$

et enfin si la combustion est complète jusqu'à réaliser l'équilibre thermodynamique réversible, la relation suivante est vérifiée :

$$\frac{\left[P\,CO\right]\left[P\,O_2\right]^{\frac{1}{2}}}{\left[P\,CO_2\right]} = K(T) \qquad (4)$$

avec K(T) un coefficient d'équilibre dépendant de la température, et P CO, P $O_2$, P $CO_2$ les pressions partielles d'oxyde de carbone, d'oxygène et de gaz carbonique.

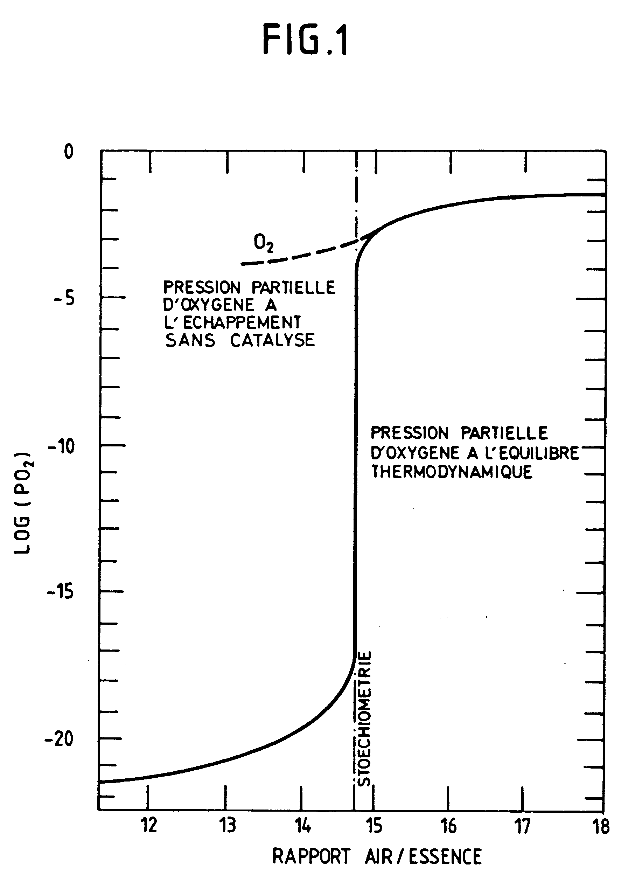

Dans les applications concernant la régulation des moteurs automobiles à allumage commandé, afin de déterminer la pression partielle d'oxygène à l'échappement (milieu 1 par exemple) connaissant celle de référence (milieu 2 qui est en général l'air) en s'affranchissant de la mesure ou de la régulation de la température, on utilise le fait que si les gaz d'échappement sont amenés à l'équilibre thermodynamique (fin de combustion) la pression partielle d'oxygène, ainsi qu'en atteste la figure 1, voit sa valeur varier de quelques 15 ordres de grandeurs lorsque le mélange alimentant les cylindres passe par la stoechiométrie.

Ainsi, dans la formule de NERNST ci-dessus décrite, on observe un saut de tension lorsque le mélange

2

passe la stoechiométrie $\Delta V = RT/4F \log PO_2^{riche}/PO_2^{pauvre}$); si la température est de l'ordre de 800°C, le terme RT/4F est de l'ordre de 50 mV et le $\Delta V$ sera supérieur à 750 mV.

De tels capteurs dits stoechiométriques sont en général constitués d'un doigt de gant en zircone stabilisée; la paroi externe munie d'une électrode de platine poreux (électrode de mesure) est en contact avec le gaz dont on veut analyser la teneur en oxygène et la paroi interne aussi munie d'une électrode de platine (électrode de référence) est en contact avec un gaz de référence, en général l'air. Le platine de l'électrode de mesure catalyse la fin de combustion des gaz d'échappement par exemple et, afin de ne pas saturer le platine, on l'encapsule à l'aide d'une couche de diffusion poreuse qui a pour principal effet de limiter le flux de gaz arrivant sur les sites catalytiques de l'électrode de platine.

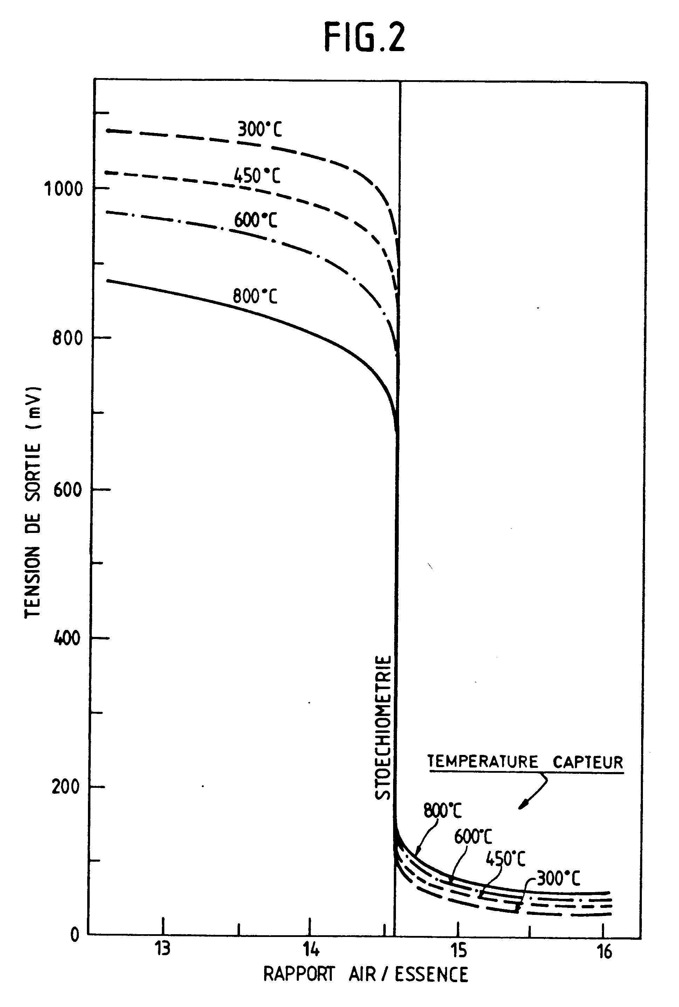

La figure 2 représente quelques réponses type de ces capteurs en doigt de gant utilisant l'air comme référence.

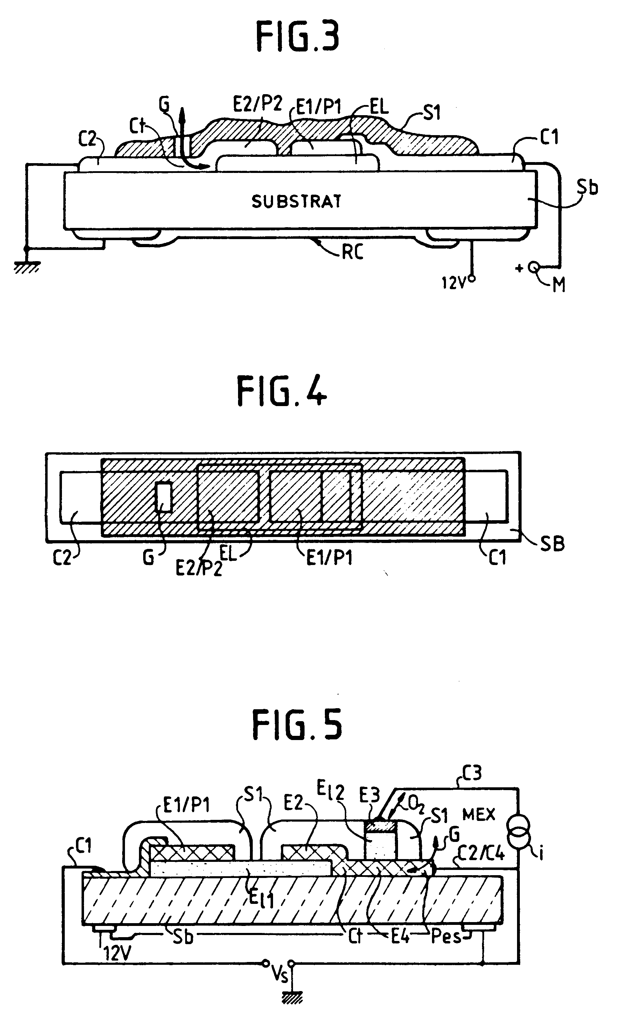

Cependant, la réalisation de tels capteurs peut prendre des formes différentes. Les figures 3 et 4 représentent des exemples de formes de réalisation obtenues à partir de dépôts successifs (couches minces ou couches épaisses) de matériaux céramiques et métalliques sur un substrat isolant électriquement. Selon la figure 3, on sait réaliser un capteur électrochimique comportant sur un substrat Sb un électrolyte solide EL. Cet électrolyte peut être en zircone, thorine ou oxyde de cérium stabilisés par un ou plusieurs éléments des colonnes $II_A$ et $III_B$ de la classification périodique des éléments. Il peut être en couche mince ou épaisse ou sous forme massive.

Sur l'électrolyte EL et sur le substrat Sb sont déposées des électrodes E2/P2 et E1/P1. Les électrodes E1/P1 et E2/P2 sont situées dans un même plan. L'électrode E1/P1 combine les fonctions d'électrode et de milieu de référence. L'électrode E1/P1 est en outre protégée du milieu extérieur par un isolant étanche et inerte S1, qui la recouvre. On peut, par exemple, utiliser une association du type Ni/NiO ou Pd/PdO pour réaliser cette électrode-milieu de référence. L'électrode E2/P2 comporte deux zones et communique directement avec le milieu à analyser dans lequel circule le mélange gazeux G par un orifice pratiqué dans le corps isolant S1 qui la recouvre également. Dans la première zone Ct, l'électrode n'est pas en contact avec l'électrolyte EL. Le fluide à analyser doit traverser la zone Ct qui tient lieu de catalyseur. Dans cette zone les espèces réactives du mélange à analyser (par exemple, dans le cas des gaz d'échappement : CO et $O_2$) sont amenées à l'équilibre thermodynamique complet avant qu'elles n'atteignent la cellule électrochimique proprement dite :

E2/P2 - EL - E1/P1

P2 représente la pression partielle d'oxygène après catalyse dans le milieu réel à analyser. La catalyse qui permet l'obtention de l'équilibre thermodynamique s'effectue par la traversée du catalyseur par le fluide suivant une direction parallèle au plan des électrodes. Les électrodes sont prolongées vers l'extérieur par des liaisons métalliques sur lesquelles peuvent être soudés les contacts C1 et C2, liaisons qui sont réalisées en laque de platine par exemple. Dans un exemple de réalisation pratique les liaisons métalliques et les électrodes sont réalisées en une seule pièce. Le substrat Sb peut être constitué par un bon isolant à la température de fonctionnement du dispositif (du corindon par exemple) et assure la tenue mécanique de l'ensemble. La face du substrat 1 opposée à la cellule électrochimique porte une résistance de chauffage RC qui permet d'accélérer la réaction.

Les dépôts peuvent être réalisés par les techniques bien connues, telles que : dépôt sous vide (pulvérisation cathodique, évaporation), dépôt en phase vapeur, dépôt électrochimique ou implantation ionique ou par une combinaison de deux ou plusieurs de ces techniques. Pour un mélange de référence métal/métal oxydé, tel que Pd/PdO, la réponse en tension à une température de l'ordre de 800°C est représentée sur la figure 2 pour la température correspondante.

On trouvera les descriptions de capteurs ainsi réalisés dans les brevets français N° 2 441 164 et 2 444 272.

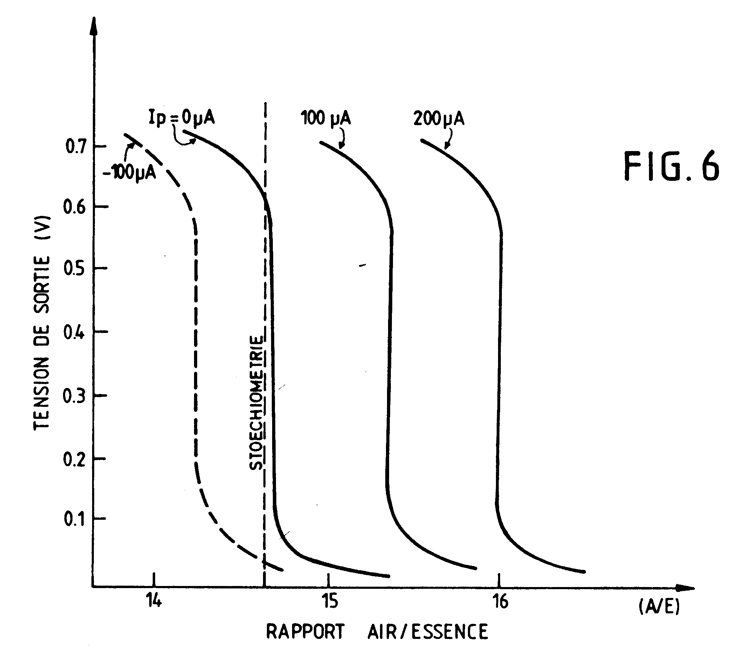

La figure 5 représente un autre mode de réalisation d'un capteur selon l'art connu.

On retrouve sur cette figure les éléments qui ont été illustrés en relation avec la figure 3: la cellule de mesure E1/P1 - Eℓ - E2/P2 déposée en couches minces ou épaisses sur un substrat Sb, la région de catalyse Ct et la région de prise d'essais $P_{es}$ où s'effectuent les interactions avec le mélange gazeux à analyser. Ces deux dernières régions étant en fait dans l'exemple décrit constituées par un prolongement de l'électrode de mesure E2/P2. Le signal de sortie VS du capteur est transmis à des circuits extérieurs non représentés, par les connexions C1 et C2. Les deux électrodes E1/P1 et E2/P2 au moins doivent être protégées par une enveloppe isolante étanche et inerte S1, en émail par exemple.

Selon le capteur de la figure 5, une cellule électrochimique supplémentaire est intégrée dans le capteur et comprend un électrolyte solide Eℓ2 inséré entre deux électrodes E3 et E4. Dans l'exemple de réalisation de la figure 5 et selon la première approche, la seconde électrode E4 est confondue avec le prolongement de l'électrode de mesure E2. La cellule affleure en surface de l'isolant S1 de façon à communiquer avec un milieu contenant de l'oxygène, ce milieu pouvant être le milieu Mex dans lequel circule le mélange gazeux à analyser G. La cellule E3 - Eℓ2 - E4 est alimentée par un courant de commande Ip par l'intermédiaire des connexions C3 et C4, C4 étant confondue avec C2. La face du substrat opposée à la cellule électrochimique porte également une résistance de chauffage RC.

Si on se reporte à nouveau à la description qui précède, on voit immédiatement que la cellule E3 - E 2 - E4 fonctionnant en pompe ionique modifie en fonction de l'amplitude et de la polarité du courant Ip, la composition en oxygène de la prise d'essai admise dans le capteur, c'est-à-dire la composition en oxygène du mélange gazeux circulant vers et au travers de la zone de catalyse Ct pour atteindre ultérieurement la cellule de mesure E2/P2 - Eℓ1 - E1/P1. Il s'ensuit que cette cellule produit un signal de sortie VS qui bascule, non plus lorsque la stoechiométrie du mélange G est atteinte mais bascule en "avance" ou en "retard" par rapport à cette stoechiométrie, le décalage de part et d'autre de la stoechiométrie étant déterminé en continu par l'amplitude et la polarité du courant de commande Ip. La figure 6, représente quelques réponses typiques de ce type de capteur en fonction du courant de polarisation Ip.

On trouvera une description d'un tel capteur dans le brevet français N° 2 494 445 et 2 442 444.

Dans les capteurs connus tels que décrits précédemment, on réalise donc une catalyse du mélange gazeux permettant d'obtenir un équilibre thermodynamique du mélange et cela avant d'effectuer la mesure de concentration des espèces constituant le mélange. Cette catalyse s'effectue au cours d'un trajet diffusif dans un corps poreux, lequel trajet est imposé par la géométrie du capteur et les différents dépôts constituant le capteur.

Ce trajet diffusif introduit un retard dans l'analyse du gaz, retard dû au temps mis par les différentes molécules pour progresser entre l'endroit où elles sont incorporées dans le matériau poreux (fenêtre de prise d'essais G) et l'endroit où elles vont fixer le potentiel électrochimique de l'électrode de travail. Ce retard dans l'analyse des gaz est susceptible de pénaliser le temps de réponse global du capteur (ce dernier faisant intervenir en plus, des phénomènes de mise à l'équilibre des différentes électrodes). Ce temps diffusif de retard $\tau$ peut être évalué selon la formule : $\tau = \ell^2/D$ où $\ell$ est la longueur du chemin diffusif et D le coefficient de diffusion de l'espèce gazeuse considérée dans le milieu poreux.

Si le diamètre moyen des pores du milieu diffusif est de l'ordre de grandeur du libre parcours moyen des molécules gazeuses à la température et à la pression de travail, (entre $10^2$ et $10^3$ Angstroems dans un pot d'échappement automobile par exemple) la diffusion s'effectue selon un mécanisme dit de Knudsen, mécanisme selon lequel l'interaction des molécules a lieu de façon prépondérante avec les parois des pores. Dans ce cas, l'expression du coefficient de diffusion est :

$$D_k = 2/3a \, (8kT/\pi M)^{\frac{1}{2}}$$

où a est le rayon moyen des pores, k la constante de Boltzmann, T la température absolue et M la masse moléculaire de l'espèce gazeuse diffusante. A titre d'exemple, le coefficient de diffusion de l'oxygène a 1000K et à pression atmosphérique dans un milieu poreux où le diamètre moyen des pores est de $10^3$ Angstroems, est de l'ordre de $10^{-2}$ cm² sec⁻¹. Le temps de diffusion associé a une longueur de diffusion de l'ordre de 100 μm est dans ces conditions de l'ordre de 10 ms.

Remarquons de plus, que dans la formule établie par Knudsen, on ne tient compte que des interactions purement mécaniques entre le gaz et les parois des pores.

Or, lorsque l'on fait diffuser des gaz réactifs tels que CO et $O_2$ dans un milieu poreux constitué d'oxydes ou de mélanges métal/oxyde (Cermet), les chocs des molécules de gaz sur les parois des pores sont accompagnés d'un temps de rétention, correspondant à une adsorption transitoire des molécules gazeuses sur les sites de défauts de surface toujours présents dans des polycristaux d'oxydes ou de métaux. Ainsi donc, les molécules progressent par adsorption et désorption successives et les temps de diffusion des molécules gazeuses en question s'en trouvent considérablement augmentés pouvant atteindre plusieurs secondes pour une longueur de diffusion toujours égale à 100μm.

Si d'autre part, le milieu diffusif est tel que la taille moyenne des pores soit largement supérieure au libre parcours moyen des molécules gazeuses dans le milieu à la pression et à la température considérées, les molécules vont interagir entre elles de façon prépondérante et l'effet des parois des pores va s'estomper. Dans ce cas, la diffusion a lieu par chocs successifs des molécules de gaz diffusant sur les molécules du gaz porteur. Le coefficient de diffusion du gaz i dans un gaz porteur monomoléculaire j s'écrit alors de façon simplifiée :

$$Dij = K \, \frac{\left[ T^3 \, (Mi + Mj) / 2 \, Mi \, Mj \right]^{\frac{1}{2}}}{p \, \mathcal{S} \, ij}$$

où les Mi,j sont les masses moléculaires des gaz i et j, T la température absolue, p la pression totale, $\epsilon$ ij le diamètre de collision et K une constante. A titre indicatif, le coefficient de diffusion de l'oxygène à 1000K dans de l'azote est de l'ordre de 1,6 cm$^2$. sec$^{-1}$. Ainsi, le temps de diffusion associé à une longueur diffusive de l'ordre de 100 $\mu$m est dans ces conditions de l'ordre de 100 $\mu$sec soit au moins 100 fois plus faible que dans le cas précédemment considéré.

Il apparaît donc au vu de ces évaluations que plus le régime diffusif dans la couche de limitation poreuse sera de type moléculaire (deuxième cas décrit ci-dessus), plus le temps de diffusion associé sera court et plus, dans le cas nous concernant, le temps de reponse du capteur sera faible.

Les documents EP-0 140 295 A3 et EP-0 104 636 décrivent des dispositifs permettant une diffusion moléculaire des gaz. Cependant, ces dispositifs nécessitent des températures de cuisson élevées supérieures à la température d'utilisation.

L'invention concerne donc un capteur dans lequel on favorise le régime de diffusion moléculaire en vue de réduire le temps de diffusion des molécules gazeuses et corrélativement en vue de réduire le temps de réponse global du capteur.

L'invention concerne un procédé de réalisation de microcavités, en technologie de type couche mince ou couche épaisse, sur une première couche de matériau recouvert d'au moins une deuxième couche de matériau, dans lequel on a tout d'abord une étape de :

- réalisation sur la première couche de matériau d'au moins un élément ayant les formes et dimensions de la ou des microcavités à réaliser, le matériau constituant ledit élément étant volatile ou combustible par chauffage ;
  ledit procédé étant caractérisé en ce qu'il comprend ensuite les étapes suivants :
- dépôt de la deuxième couche constitué d'un émail dévitrifiable sur l'ensemble dudit élément et de la première couche de telle façon qu'une zone au moins de l'élément ne soit pas recouverte par la deuxième couche ;
- chauffage de l'ensemble ainsi obtenu à une température permettant l'évaporation ou la combustion du matériau de l'élément, les produits d'évaporation ou de combustion sortant, de la microcavité à obtenir, par la zone de l'élément non recouverte par la deuxième couche.

L'invention concerne également un capteur électrochimique de mesure de concentrations relatives d'espèces contenues dans un mélange fluide comprenant :

- au moins un électrolyte solide conducteur ionique d'une des espèces du mélange fluide ou d'un ion susceptible de réagir avec cette espèce ;
- une première électrode à référence interne de pression partielle en contact par l'une de ses faces en tout ou partie avec l'électrolyte solide;
- une deuxième électrode de mesure en contact par l'une de ses faces en tout ou partie avec l'électrolyte solide et recevant le mélange fluide à analyser ;
- une couche d'un matériau d'encapsulation en matériau inerte et étanche aux espèces présentes dans le mélange fluide, recouvrant la première électrode, la deuxième électrode et l'électrolyte solide et possédant un orifice d'accès permettant au mélange fluide d'atteindre la deuxième électrode ;
  caractérisé en qu'il comporte également une cavité recouvrant en partie la deuxième électrode dans la zone qui recouvre l'électrolyte, cette cavité communiquant par l'orifice d'accès avec le mélange fluide à analyser et ayant des dimensions permettant une diffusion du fluide d'un type moléculaire.

L'invention concerne également un chromatographe réalisé selon le procédé caractérisé en ce qu'il comporte un substrat, une couche d'un matériau étanche, un microcanal de propagation du gaz et ce dernier étant situé entre le substrat et ladite couche.

Les différents objets et caractéristiques de l'invention apparaîtront plus clairement dans la description qui va suivre faite à titre d'exemple en se reportant aux figures annexées qui représentent :

- la figure 1, un diagramme des pressions partielles d'oxygène dans des gaz d'échappements automobiles ;
- la figure 2, des courbes de réponses en tension de capteurs automobiles fonctionnant avec une référence air ou mélange métal/métal oxydé ;
- les figures 3 à 5, des exemples de réalisation de capteurs connus dans la technique et déjà décrits précédemment ;
- la figure 6, des courbes de réponses d'un capteur selon la figure 5 ;
- les figures 7 et 8, un exemple de réalisation d'un capteur selon l'invention;
- la figure 9, une étape d'obtention du procédé selon l'invention ;
- les figures 10, 11 des représentations simplifiées d'un chromatographe ;
- les figures 12 à 22, des étapes d'un procédé de réalisation selon l'invention d'un chromatographe.

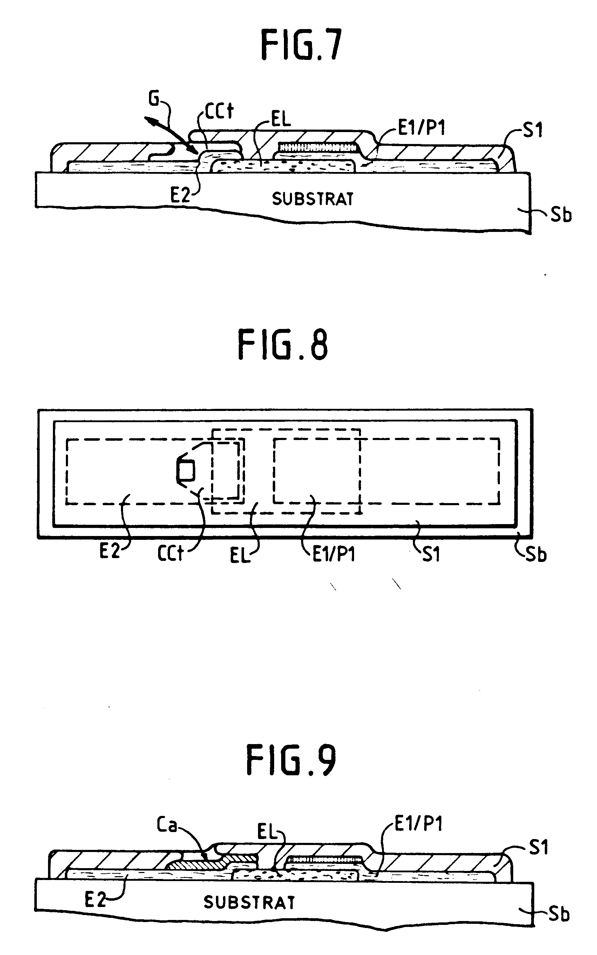

Les capteurs connus dans la technique, tels que ceux représentés par les figures 3 à 5 ayant été décrits précédemment, on va décrire un exemple de réalisation d'un capteur selon l'invention tel que celui représenté par les figures 7 et 8.

Comme mentionné précédemment dans un régime de diffusion de Knudsen, l'interaction des molécules avec les parois des pores ne se fait pas uniquement par chocs mais par adsorptions et désorptions successives. Ce phénomène aura pour effet d'abaisser encore la valeur du coefficient de diffusion (et donc d'augmenter le temps de diffusion) de gaz réactifs tels que CO et $O_2$ dans des milieux poreux à base de céramiques réfractaires ($Al_2O_3$, $MgAl_2O_4$, etc.) et de platine, constituant d'excellents supports d'adsorption.

Dans le but d'abaisser le temps de diffusion, on va donc chercher à favoriser un régime de diffusion moléculaire par rapport à un régime de diffusion de Knudsen. Cependant il est difficile d'augmenter de façon significative la porosité du matériau dans lequel la diffusion a lieu, car ce faisant, on diminue l'effet de limitation du flux gazeux par la couche poreuse et l'on sature les sites d'adsorption de l'électrode de travail, ce qui a pour effet de diminuer notablement l'activité catalytique de cette même électrode de travail. Il s'ensuit que la hauteur du signal délivré par le capteur est amoindrie et que la transition de tension à la stoechiométrie est moins raide, choses que l'on veut éviter.

Afin de conserver l'effet de limitation du flux et cependant fonctionner en régime de diffusion à caractère moléculaire marqué, l'invention prévoit de remplacer le corps poreux par une cavité calibrée d'épaisseur faible, de largeur correspondant à la largeur de l'électrode de travail et de longueur comprise entre 50 et 750$\mu$m typiquement.

Les figures 7 et 8 représentent un exemple de réalisation du capteur selon l'invention.

La constitution générale de ce capteur est similaire à celle du capteur de la figure 3. On retrouve sur la figure 7 les mêmes éléments portant les mêmes références que ceux de la figure 3. On retrouve donc le substrat Sb, l'électrolyte EL, l'électrode de référence E1/P1, l'électrode de travail E2/P2 et la couche d'encapsulation S1.

Le capteur de la figure 7 diffère du capteur de la figure 3 par le fait qu'une cavité CCt recouvre partiellement l'électrode E2 et notamment dans la partie de l'électrode qui recouvre l'électrolyte. Cette cavité communique par l'accès G avec le milieu contenant le mélange gazeux à mesurer. Les dimensions de cette cavité sont telles qu'on ait une diffusion moléculaire du mélange gazeux à l'intérieur de cette même cavité ; à titre d'exemple, l'épaisseur est de 1 à 5 micromètres et la largeur est la même que celle de l'électrode de mesure.

De cette façon l'équilibre thermodynamique du mélange gazeux se fera rapidement dans la cavité car du fait de sa faible épaisseur, le flux de molécules pénétrant à l'intérieur est limité et le mélange gazeux n'aura à traverser l'électrode E2 uniquement que selon l'épaisseur de l'électrode (dans le sens vertical sur la figure) au lieu d'avoir une diffusion parallèlement au substrat dans le cas de la figure 3. La catalyse s'effectuera lors de cette diffusion en épaisseur.

En se reportant à la figure 9, on va décrire un procédé d'obtention d'un tel capteur et notamment le procédé permettant de réaliser la cavité CCt. En effet la réalisation d'une telle cavité recouverte d'émail S1 et d'épaisseur aussi faible (1 à 5 micromètres) pose des problèmes de réalisation technologique. L'invention permet de résoudre ces problèmes.

Selon le procédé de l'invention, on dispose sur l'électrode de travail une couche de 1 à 5 micromètres d'épaisseur de carbone Ca ou de toute autre matière organique (photoresist, PMMA, polymère...) avant de déposer l'émail encapsulant (voir figure 9). On grave cette couche Ca de façon à lui donner la forme et l'épaisseur de la cavité à obtenir. Ensuite, on dépose un émail encapsulant qui est du type verre dévitrifiable connu de l'homme de l'art. Une fois l'émail encapsulant déposé on cuit l'ensemble dans une atmosphère oxygénée (air par exemple) de façon à éliminer par combustion la couche de carbone ou de matière organique. On définit ainsi sous la couche d'émail un vide calibré dans lequel la diffusion gazeuse sera à tendance moléculaire marquée.

Dans le cas où les différentes couches sont déposées par sérigraphie, on utilise, pour la couche Ca une pâte comprenant, dans un milieu tel que éthylcellulose + terpinéol, un pourcentage massique de carbone pouvant varier entre 10 et 75 %.

A titre d'exemple non limitatif, une composition contenant 30 % de carbone en poids, 2,1 % d'éthylcellulose, 11,2 % d'un solvant tel que dibutylphtalate et 56,7 % d'un solvant tel que terpinéol donne de bons résultats.

On arrive ainsi à fabriquer une cavité d'une épaisseur uniforme de 1 à 5$\mu$m sur toute la surface de l'électrode de travail.

On préfèrera utiliser comme émail d'encapsulation un matétiau dévitrifiable, de façon à ce qu'il puisse supporter des températures de fonctionnement égales ou supérieures à sa température de cuisson et de nappage (par exemple 900° C) sans pour autant se déformer ou couler. Ceci permet à la cavité de conserver son épaisseur en cours de fonctionnement et donc au capteur de conserver ses caractéristiques.

Enfin notons que l'emploi de carbone est préféré à toute autre matière organique car ce dernier ne peut que brûler et se transformer en $CO_2$, à l'inverse des polymères et autres dérivés organiques qui commencent souvent par craquer quand on les chauffe.

L'utilisation d'un capteur selon l'invention a permis d'abaisser les temps de réponse des capteurs. C'est ainsi qu'on a obtenu 40ms de temps de réponse avec un capteur selon l'invention alors qu'on obtenait 100ms et plus lorsque le canal diffusif était en céramique ou cermet (céramique/métal) à porosité contrôlée. Bien que l'invention ait été décrite en s'appuyant sur un exemple de capteur galvanique, il est évident qu'elle peut être étendue à tout type de capteurs et notamment aux capteurs résistifs.

Outre l'application aux capteurs d'oxygène de type galvanique ou résistif telle que décrite précédemment, la présente invention permet aussi la fabrication de microcanaux pouvant par exemple être utilisés dans la conception de microchromatographe en phase gazeuse et particulièrement de colonnes de séparation de tels microchromatographes.

Un chromatographe en phase gazeuse se compose d'une colonne séparatrice, dans laquelle le mélange gazeux que l'on désire analyser est séparé par diffusion dans un gaz porteur (hélium en général). Chaque constituant du mélange ainsi séparé passe ensuite sur une cellule de détection comprenant, par exemple une résistance électrique à fort coefficient de température montée dans un pont de wheastone, qui par mesure de conductivité thermique identifie le constituant en question.

La présente invention concerne uniquement la partie "colonne séparatrice" du chromatographe (ou du microchromatographe). Comme indiqué précédemment, le mélange gazeux est séparé par diffusion dans ladite colonne. Si l'on se reporte aux expressions des coefficients de diffusion données précédemment soit dans le cas d'une diffusion obéissant au mécanisme de Knudsen (Dk), soit dans le cas d'une diffusion de type moléculaire (Dij) on voit que la masse moléculaire du gaz i à analyser détermine, à température et pression connues et constantes, la valeur du coefficient de diffusion de l'espèce i soit dans un milieu poreux soit dans un gax porteur j. Dans le cas où le régime de diffusion est mixte, c'est-à-dire dans le cas où l'on est en présence ni d'une diffusion de type purement Knudsen, ni d'une diffusion de type purement moléculaire le coefficient de diffusion de l'espèce gazeuse i. Di s'exprime sous la forme 1/Di = 1/Dk + 1/Dij.

En d'autres termes, dans tous les cas de diffusion possibles, le coefficient de diffusion d'une espèce i est différent selon la masse moléculaire de cette même espèce.

Si l'on est en présence d'une colonne de séparation de longueur appropriée et si un mélange de gaz est admis à l'entrée de la colonne, ces différents gaz vont arriver sur une cellule de détection située à la sortie de la colonne à des temps $t_i = \ell^2/D_i$ parfaitement différents et, en conséquence, les gaz étant séparés pourront être analysés et identifiés individuellement en mesurant par exemple leur conductivité thermique.

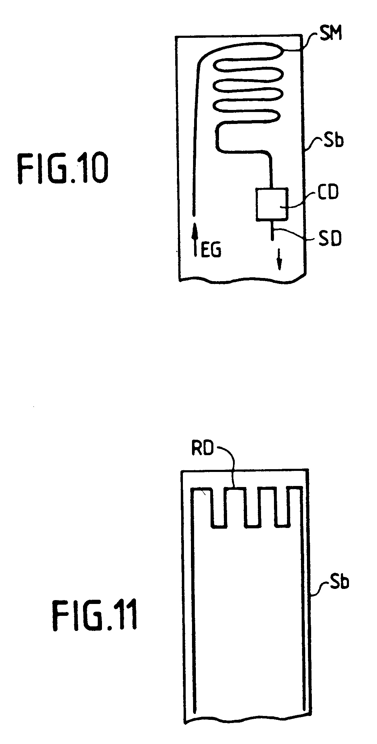

Les figures 10 et 11 représentent de façon simplifiée un tel microchromatographe. Sur la figure 10, on peut voir qu'un substrat Sb porte, sur une de ses faces, un serpentin ou colonne séparatrice SM possédant une entrée des gaz EG et qui est connecté à un détecteur CD. Après passage sur le détecteur, les gaz sont évacués par la sortie SD. Le mélange de gaz entre par l'entrée EG, parcourt la colonne séparatrice SM et chaque constituant atteint séparément le détecteur CD où il est identifié, avant d'être évalué par la sortie SD. Bien que cela ne soit pas représenté sur la figure 10, la colonne séparatrice SM est recouverte par une couche d'émail dévitrifiable.

Sur la figure 11, on voit que l'autre face du substrat Sb porte, en vis-à-vis de la colonne séparatrice, une résistance de chauffage RD permettant d'accélérer la diffusion et donc de réduire le temps de réponse du microchromatographe.

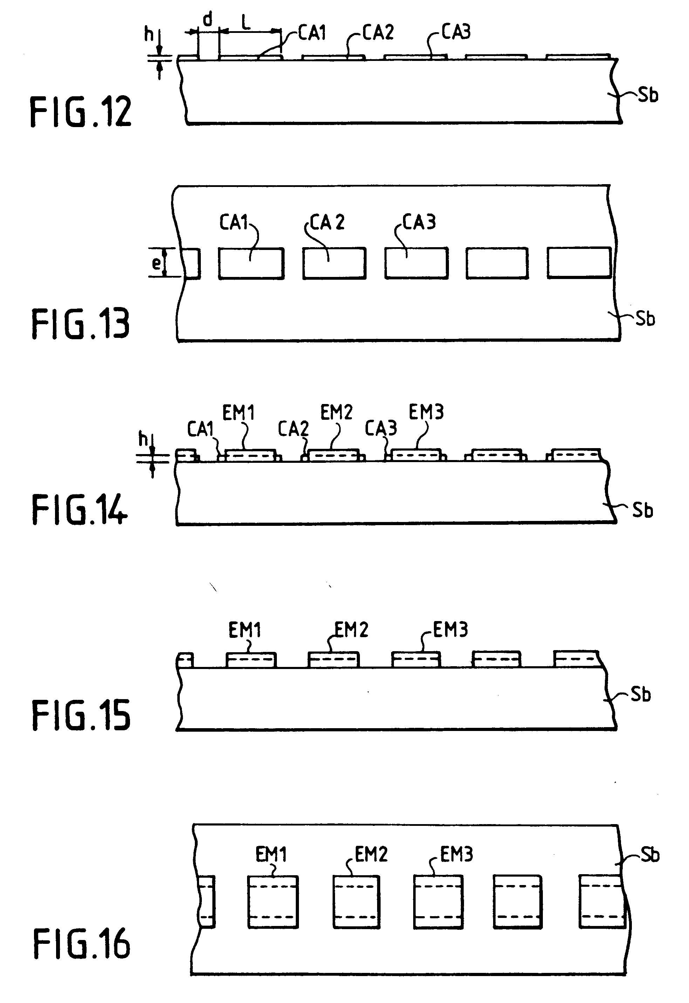

En se reportant aux figures 12 à 21 on va décrire un exemple de procédé de réalisation de la colonne séparatrice SM de chromatographe.

Comme représenté sur les figures 12 et 13, sur un substrat Sb on réalise des plots CA1, CA2, CA3 en matériau combustible ou volatile, par exemple à base de carbone. Ces plots sont alignés selon le tracé de la future colonne séparatrice à obtenir.

A titre d'exemple non limitatif leurs dimensions sont :
- longueur L = 50 à 100 micromètres
- largeur e = 10 à 20 micromètres ou plus
- épaisseur h = 1 à 5 micromètres.

Ces plots sont de préférence tous identiques.

Ils sont espacés d'une distance d qui peut être par exemple de 2 à 5 micromètres donc d'une distance très faible par rapport à la longueur L de chaque plot.

Sur chaque plot est réalisée une couche telle que EM1 pour CA1 et EM2 pour CA2, en émail dévitrifiable. Chaque couche laisse libre deux extrémités situées le long du tracé de la colonne séparatrice.

On a ainsi la configuration de la figure 14.

L'ensemble est ensuite chauffé de telle façon que le matériau des plots CA1, CA2, CA3 se consumme (ou se volatilise), les gaz résultant s'échappant par les extrémités des plots. Il reste alors sous chaque élément en émail dévitrifiable EM1, EM2, EM3, un canal exempt de matériau tel que cela est représenté en figures 15 et 16.

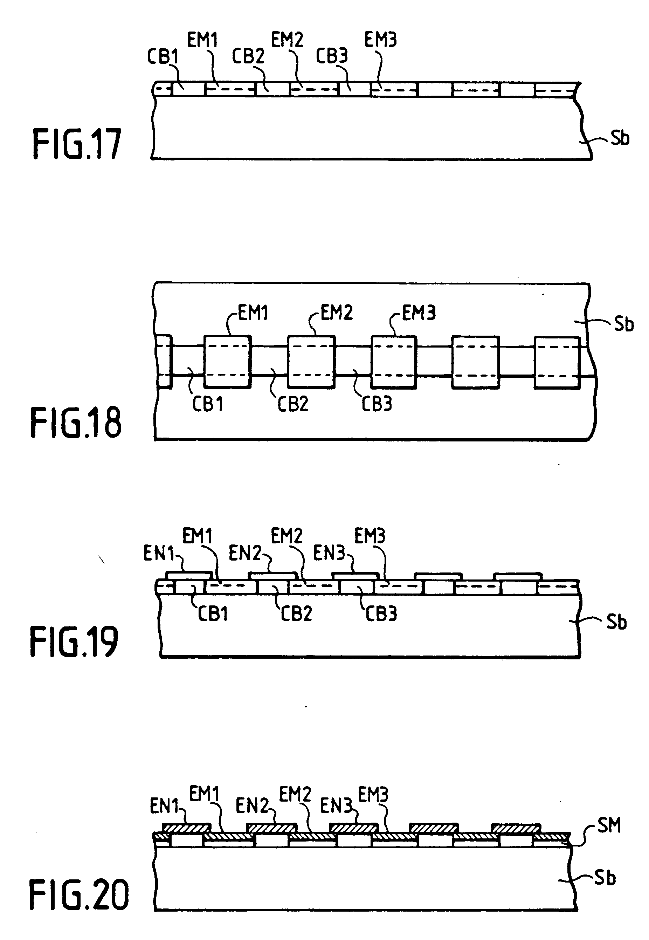

Ensuite, comme cela est représenté en figures 17 et 18, du matériau, du même type que celui des plots CA1, CA2, CA3 précédents, est déposé entre les éléments EM1, EM2, EM3 le long du tracé de la colonne séparatrice. On obtient les éléments CB1, CB2, CB3. Ces éléments sont ensuite recouverts par une couche d'émail dévitrifiable. Cela peut être fait soit par une couche uniforme pour l'ensemble du dispositif, soit comme cela est représenté sur la figure 19 par des éléments EN1, EN2, EN3 en matériau dévitrifiable particulier chacun à un élément CB1, CB2, CB3.

L'ensemble est ensuite à nouveau chauffé de façon que le matériau des éléments CB1, CB2, CB3 se consumme ou se volatilise. Les gaz résultant se répartissent puis s'échappent par les deux orifices restés libres du canal ainsi constitué. On obtient le dispositif représenté en figure 20 dans lequel un canal ou une colonne séparatrice SM est recouvert d'émail dévitrifiable (EM1, EN1 à EM3, EN3).

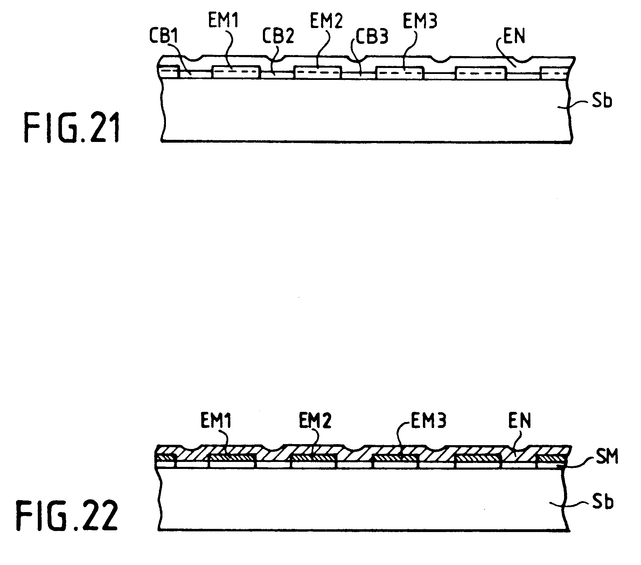

Les figures 21 et 22 représentent une variante du procédé de réalisation selon l'invention.

En figure 21 on voit que les éléments CB1, CB2, CB3 réalisés entre les éléments en matériau dévitrifiable EM1, EM2, EM3 ont sensiblement la même épaisseur que les éléments CA1, CA2, CA3 antérieurement réalisés. L'ensemble est recouvert d'une couche uniforme EN d'émail dévitrifiable.

Après chauffage de l'ensemble on obtient ainsi un canal ou colonne séparatrice SM de dimensions sensiblement régulières, recouverte par les éléments EM1, EM2, EM3 et la couche d'émail dévitrifiable EN.

A titre général on voit donc que le procédé de l'invention permet de réaliser différents types de dispositifs tels que capteurs électrochimiques, chromatographes en phase gazeuse, nécessitant un canal ou une cavité de dimensions très petites telle, par exemple, qu'elles permettent une diffusion du type moléculaire d'un gaz.

La figure 22 représente en coupe le canal SM obtenu après cuisson du dispositif de la figure 21. Ce canal SM est sensiblement de profil constant.

Les exemples numériques et le choix des matériaux n'ont été fournis que pour illustrer la description.

## Revendications

1. Procédé de réalisation, en technologie de type couche mince ou couche épaisse, de microcavités sur une première couche de matériau (Sb) recouvert d'au moins une deuxième couche de matériau (S1), dans lequel on a tout d'abord une étape de :
    - réalisation sur la première couche de matériau (Sb) d'au moins un élément (Ca) ayant les formes et dimensions de la ou des microcavités (CCt) à réaliser, le matériau constituant ledit élément (Ca) étant volatile ou combustible par chauffage ;
    ledit procédé étant caractérisé en ce qu'il comprend ensuite les étapes suivantes :
    - dépôt de la deuxième couche (S1) constituée d'un émail dévitrifiable sur l'ensemble dudit élément (Ca) et de la première couche (Sb) de telle façon qu'une zone au moins de l'élément (Ca) ne soit pas recouverte par la deuxième couche (S1) ;
    - chauffage de l'ensemble ainsi obtenu à une température permettant l'évaporation ou la combustion du matériau de l'élément (Ca), les produits d'évaporation ou de combustion sortant, de la microcavité à obtenir, par la zone de l'élément (Ca) non recouverte par la deuxième couche (S1).

2. Procédé de réalisation selon la revendication 1, caractérisé en ce que l'élément (Ca) en matériau volatile ou combustible est à base de carbone.

3. Procédé de réalisation selon la revendication 2, caractérisé en ce que ledit élément est en carbone pur.

4. Application du procédé de la revendication 1 à la réalisation d'un capteur électrochimique selon laquelle on réalise sur un substrat au moins un élément en electrolyte solide (EL), une première électrode (E1/P1) recouvrant partiellement l'élément electrolyte (EL), une deuxième électrode (E2) recouvrant également partiellement l'élément electrolyte (EL), caractérisé en ce qu'il comporte ensuite les étapes successives suivantes :
    - une étape de réalisation sur la deuxième électrode d'un élément (Ca) en matériau combustible et/ou volatile à haute température et ayant la forme, l'épaisseur et la position que doit avoir la cavité (CCt) à obtenir ;

EP 0 309 334 B1

- une étape de réalisation autour de l'ensemble du capteur d'une enveloppe en émail dévitrifiable étanche aux espèces du mélange fluide et réalisation dans cette enveloppe d'un orifice d'accès à l'élément (Ca) en matériau combustible et/ou volatile ;
- une étape de chauffage d'au moins l'élément (Ca) en matériau combustible et/ou volatile de façon à provoquer son évaporation et/ou sa combustion.

5. Procédé de réalisation selon la revendication 4, caractérisé en ce que l'épaisseur de l'élément (Ca) en matériau combustible et/ou volatile est comprise entre 1 et 5 micromètres.

6. Procédé de réalisation selon la revendication 4, caractérisé en ce que l'élément (Ca) en matériau combustible et/ou volatile est situé sur la partie de la deuxième électrode (E2) qui recouvre l'élément en électrolyte (EL).

7. Application du procédé de la revendication 1 à la réalisation d'un chromatographe, caractérisé en ce qu'il comporte les étapes successives suivantes :
   - réalisation de plots (CA1, CA2, CA3,...) en matériau combustible ou volatile disposé selon le tracé d'un microcanal à obtenir et de largeur, la largeur du microcanal ;
   - réalisation d'éléments (EM1, EM2, EM3,...) en émail dévitrifiable étanche recouvrant chacun un plot sauf aux extrémités des plots situées le long du microcanal ;
   - chauffage de l'ensemble pour obtenir la combustion ou l'évaporation des plots ;
   - dépôt de matériau combustible ou volatile entre les éléments (EM1, EM2, EM3,...), le long du microcanal ;
   - dépôt d'émail dévitrifiable étanche sur le matériau combustible ou volatile ;
   - chauffage de l'ensemble pour obtenir la combustion ou l'évaporation du matériau combustible ou volatile.

8. Procédé selon la revendication 7, caractérisé en ce que les plots en matériau combustible ou volatile sont tous de même dimension, et de largeur et hauteur, la largeur et hauteur du microcanal.

9. Procédé selon la revendication 7, caractérisé en ce que le deuxième dépôt de matériau combustible ou volatile consiste à déposer entre les éléments en matériau étanche des éléments en matériau combustible et volatile de même hauteur et de même largeur que les plots en matériau combustible ou volatile.

10. Procédé selon la revendication 9, caractérisé en ce que le matériau combustible ou volatile est à base de carbone.

11. Procédé selon la revendication 10, caractérisé en ce que le matériau combustible ou volatile est du carbure en pâte de sérigraphie.

12. Capteur électrochimique de mesure de concentration relatives d'espèces contenus dans un mélange fluide, réalisé selon le procédé de la revendication 4, comprenant :
    - au moins un électrolyte solide (EL) conducteur ionique d'une des espèces du mélange fluide ou d'un ion susceptible de réagir avec cette espèce ;
    - au moins une première électrode (E1/P1) à référence interne de pression partielle en contact par l'une de ses faces en tout ou partie avec l'électrolyte solide (EL) ;
    - au moins une deuxième électrode de mesure (E2) en contact par l'une de ses faces en tout ou partie avec l'électrolyte solide (EL) et recevant le mélange fluide à analyse ;
    - une couche d'un matériau d'encapsulation (S1) en matériau inerte et étanche aux espèces présentes dans le mélange fluide recouvrant la première électrode (E1/P1), la deuxième électrode (E2) et l'électrolyte solide (EL) et possédant un orifice d'accès (G) permettant au mélange fluide d'atteindre la deuxième électrode ;
    caractérisé en ce qu'il comporte au moins une microcavité (CCt) recouvrant en partie la deuxième électrode de mesure (E2) dans la zone qui recouvre l'électrolyte (EL), cette cavité communiquant par l'orifice d'accès (G) avec le mélange fluide à analyser et ayant une épaisseur permettant une diffusion du fluide d'un type moléculaire, et en ce que la couche (S1) est en émail dévitrifiable.

13. Capteur électrochimique selon la revendication 10, caractérisé en ce que l'épaisseur de la cavité est

9

comprise entre 1 et 5 micromètres.

14. Chromatographe réalisé selon le procédé de la revendication 7, caractérisé en ce qu'il comporte un substrat (Sa), une couche d'émail dévitrifiable étanche, un microcanal de propagation du gaz (SM) situé entre le substrat (Sa) et ladite couche d'émail dévitrifiable.

**Claims**

1. Process for constructing, using technology of thin layer or thick layer type, microcavities on a first layer of material (Sb) covered by at least one second layer of material (S1), which process comprises, first of all, a step of:
   - constructing on the first layer of material (Sb) at least one element (Ca) having the shapes and dimensions of the microcavity or microcavities (CCt) to be constructed, the material constituting said element (Ca) being volatile or combustible by heating;
   said process being characterised in that it then comprises the following steps:
   - depositing of the second layer (S1), formed of a devitrifiable enamel, on the assembly composed of said element (Ca) and of the first layer (Sb) in such a manner that at least a zone of the element (Ca) is not covered by the second layer (S1);
   - heating of the assembly thus obtained to a temperature permitting the vaporisation or the combustion of the material of the element (Ca), the vaporisation or combustion products escaping from the microcavity to be obtained through that zone of the element (Ca) which is not covered by the second layer (S1).

2. Construction process according to Claim 1, characterised in that the element (Ca) of volatile or combustible material is carbon-based.

3. Construction process according to Claim 2, characterised in that said element is made of pure carbon.

4. Application of the process of Claim 1 to the construction of an electrochemical sensor, according to which application there is constructed on a substrate at least one element composed of solid electrolyte (EL), a first electrode (E1/P1) partially covering the electrolyte element (EL), a second electrode (E2) likewise partially covering the electrolyte element (EL), characterised in that it then includes the following successive steps:
   - a step of constructing on the second electrode an element (Ca) of material which is combustible and/or volatile at high temperature, and having the shape, the thickness and the position which the cavity (CCt) to be obtained is to have;
   - a step of constructing around the assembly of the sensor a casing of devitrifiable enamel which is impervious to the species of the fluid mixture and constructing, within this casing, an orifice to provide access to the element (Ca) of combustible and/or volatile material;
   - a step of heating at least the element (Ca) of combustible and/or volatile material in such a manner as to cause vaporisation thereof and/or combustion thereof.

5. Construction process according to Claim 4, characterised in that the thickness of the element (Ca) of combustible and/or volatile material is within the range between 1 and 5 micrometres.

6. Construction process according to Claim 4, characterised in that the element (Ca) of combustible and/or volatile material is situated on that part of the second electrode (E2) which covers the element composed of electrolyte (EL).

7. Application of the process of Claim 1 to the construction of a chromatograph, characterised in that it includes the following successive steps:
   - construction of studs (CA1, CA2, CA3,...) of combustible or volatile material disposed along the path of a microchannel to be obtained and having as width the width of the microchannel;
   - construction of elements (EM1, EM2, EM3,...) of impervious devitrifiable enamel, each covering a stud except at those ends of the studs which are situated along the microchannel;
   - heating of the assembly to obtain the combustion or the vaporisation of the studs;
   - depositing of combustible or volatile material between the elements (EM1, EM2, EM3,...) along the microchannel;

- depositing of impervious devitrifiable enamel on the combustible or volatile material;
- heating of the assembly to obtain the combustion or the vaporisation of the combustible or volatile material.

8. Process according to Claim 7, characterised in that the studs of combustible or volatile material are all of the same size, and have as width and height the width and height of the microchannel.

9. Process according to Claim 7, characterised in that the second deposit of combustible or volatile material consists in depositing between the elements of impervious material elements of combustible and volatile material of the same height and of the same width as the studs of combustible or volatile material.

10. Process according to Claim 9, characterised in that the combustible or volatile material is carbon-based.

11. Process according to Claim 10, characterised in that the combustible or volatile material is carbide in screen printing paste.

12. Electrochemical sensor for measuring relative concentrations of species contained in a fluid mixture, constructed according to the process of Claim 4, comprising:
    - at least one ionic conductive solid electrolyte (EL) of one of the species of the fluid mixture or of an ion capable of reacting with this species;
    - at least one first partial pressure internal reference electrode (E1/P1) in contact by one of its faces, in whole or in part, with the solid electrolyte (EL);
    - at least one second measurement electrode (E2) in contact by one of its faces, in whole or in part, with the solid electrolyte (EL) and receiving the fluid mixture for analysis;
    - a layer of an encapsulating material (S1) of material which is inert and impervious to the species present in the fluid mixture covering the first electrode (E1/P1), the second electrode (E2) and the solid electrolyte (EL) and possessing an access orifice (G) permitting the fluid mixture to reach the second electrode;
    characterised in that it includes at least one microcavity (CCt) covering, in part, the second measurement electrode (E2) in the zone which covers the electrolyte (EL), this cavity communicating via the access orifice (G) with the fluid mixture to be analysed and having a thickness permitting a diffusion of the fluid of one molecular type, and in that the layer (S1) is composed of devitrifiable enamel.

13. Electrochemical sensor according to Claim 10, characterised in that the thickness of the cavity is within the range between 1 and 5 micrometres.

14. Chromatograph constructed according to the process of Claim 7, characterised in that it includes a substrate (Sa), a layer of impervious devitrifiable enamel, a microchannel for propagation of the gas (SM) situated between the substrate (Sa) and said layer of devitrifiable enamel.

**Patentansprüche**

1. Verfahren zur Herstellung von Mikrohohlräumen nach der Dünnschichttechnologie oder Dickschichttechnologie auf einer ersten Materialschicht (Sb), die von mindestens einer zweiten Materialschicht (S1) bedeckt ist, wobei in einem ersten Verfahrensschritt auf der ersten Materialschicht (Sb) mindestens ein Element (Ca) mit den Formen und Abmessungen des bzw. der zu realisierenden Mikrohohlräume (CCt) aufgebracht wird, wobei das dieses Element (Ca) bildende Material flüchtig und durch Erwärmen verbrennbar ist,
dadurch gekennzeichnet, daß danach folgende Verfahrensschritte durchgeführt werden:
    - Aufbringen der zweiten Schicht (S1) aus einem entglasbaren Email auf dieses Element (Ca) und die erste Schicht (Sb) derart, daß mindestens eine Zone des Elements (Ca) von der zweiten Schicht nicht bedeckt ist,
    - Erhitzen des Ganzen auf eine Temperatur, bei der das Material des Elements (Ca) verdampft oder verbrennt, wobei die Verdampfungs- oder Verbrennungsprodukte aus dem zu bildenden Mikrohohlraum über die nicht mit der zweiten Schicht (S1) bedeckte Zone des Elements (Ca) abziehen.

2. Herstellungsverfahren nach Anspruch 1, dadurch gekennzeichnet, daß das Element (Ca) aus flüchtigem oder verbrennbarem Material ein Material auf Kohlenstoffbasis ist.

3. Herstellungsverfahren nach Anspruch 2, dadurch gekennzeichnet, daß dieses Element reiner Kohlenstoff ist.

4. Anwendung des Verfahrens gemäß Anspruch 1 auf die Herstellung einer elektrochemischen Sonde, wobei man auf einem Substrat mindestens ein Element aus Feststoffelektrolyt (EL), eine erste Elektrode (E1/P1), die zum Teil das Elektrolytelement (EL) bedeckt, eine zweite Elektrode (E2), die ebenfalls teilweise das Elektrolytelement bedeckt, aufbringt, dadurch gekennzeichnet, daß das Verfahren weiter die aufeinanderfolgenden Verfahrensschritte aufweist:
    - einen Verfahrensschritt der Herstellung eines Elements (Ca) aus verbrennbarem und/oder bei hoher Temperatur flüchtigem Material mit einer Form, Dicke und Lage gemäß dem zu erzielenden Hohlraum (CCt) auf der zweiten Elektrode,
    - einen Verfahrensschritt der Herstellung einer für die Bestandteile der Fluidmischung dichten Hülle aus entglasbarem Email um die ganze Sonde herum, und der Herstellung einer Zugangsöffnung zum Element (Ca) aus brennbarem und/oder flüchtigem Material in dieser Hülle,
    - und einen Verfahrensschritt des Erhitzens mindestens des Elements (Ca) aus brennbarem und/oder flüchtigem Material, so daß dieses Material verdampft und/oder verbrennt.

5. Herstellungsverfahren nach Anspruch 4, dadurch gekennzeichnet, daß die Dicke des Elements (Ca) aus brennbarem und/oder flüchtigem Material zwischen 1 und 5 Mikrometer beträgt.

6. Herstellungsverfahren nach Anspruch 4, dadurch gekennzeichnet, daß das Element (Ca) aus brennbarem und/oder flüchtigem Material auf dem Bereich der zweiten Elektrode (E2) liegt, der das Element (EL) aus Feststoffelektrolyt bedeckt.

7. Anwendung des Verfahrens nach Anspruch 1 auf die Herstellung eines Chromatographen, dadurch gekennzeichnet, daß das Verfahren folgende nacheinander ablaufende Verfahrensschritte enthält:
    - Herstellung von Inseln (CA1, CA2, CA3, ...) aus brennbarem oder flüchtigem Material, wobei diese Inseln entlang des Verlaufs eines zu erzielenden Mikrokanals angeordnet sind und dessen Breite besitzen,
    - Herstellung von Elementen (EM1, EM2, EM3, ...) aus dichtem entglasbarem Email, die je eine Insel mit Ausnahme von deren Enden bedecken, die entlang des Mikrokanals liegen,
    - Erwärmen des Ganzen, um die Verbrennung oder Verdampfung der Inseln zu bewirken,
    - Aufbringen von brennbarem oder flüchtigem Material zwischen die Elemente (EM1, EM2, EM3, ..) entlang des Mikrokanals,
    - Aufbringen von dichtem entglasbarem Email auf das brennbare oder flüchtige Material,
    - Erhitzen des Ganzen, um die Verbrennung oder Verdampfung des brennbaren oder flüchtigen Materials zu bewirken.

8. Verfahren nach Anspruch 7, dadurch gekennzeichnet, daß die Inseln aus brennbaren oder flüchtigem Material alle die gleichen Abmessungen und eine Breite und Höhe entsprechend denen des Mikrokanals besitzen.

9. Verfahren nach Anspruch 7, dadurch gekennzeichnet, daß beim zweiten Aufbringen von brennbarem oder flüchtigem Material zwischen die Elemente aus dichtem Email Elemente aus brennbarem und flüchtigem Material derselben Höhe und derselben Breite wie die Inseln aus brennbarem und flüchtigem Material aufgebracht werden.

10. Verfahren nach Anspruch 9, dadurch gekennzeichnet, daß das brennbare oder flüchtige Material ein Material auf Kohlenstoffbasis ist.

11. Verfahren nach Anspruch 10, dadurch gekennzeichnet, daß das brennbare oder flüchtige Material eine Serigraphiepaste aus Karbid ist.

12

**12.** Elektrochemische Sonde zur Messung der relativen Konzentrationen von in einer Fluidmischung enthaltenen Bestandteilen, die nach dem Verfahren gemäß Anspruch 4 hergestellt wird,

- mit mindestens einem Feststoffelektrolyten (EL), der Ionenleiter für einen der Bestandteile der Fluidmischung ist oder ein Ion besitzt, das mit diesem Bestandteil reagieren kann,
- mit mindestens einer ersten Elektrode (E1/P1) als interne Referenz des Partialdrucks, die einseitig ganz oder teilweise mit dem Feststoffelektrolyten (EL) in Kontakt steht,
- mit mindestens einer zweiten Meßelektrode (E2), die einseitig ganz oder teilweise mit dem Feststoffelektrolyten (EL) in Kontakt steht und die zu analysierende Fluidmischung zugeführt erhält,
- mit einer Schicht aus einem Einhüllmaterial (S1), das bezüglich der in der die erste Elektrode (E1/P1), die zweite Elektrode (E2) und den Feststoffelektrolyten (EL) bedeckenden Fluidmischung vorhandenen Bestandteile inert und dicht ist und eine Zugangsöffnung (G) besitzt, die die Fluidmischung an die zweite Elektrode gelangen läßt,

dadurch gekennzeichnet, daß mindestens ein Mikrohohlraum (CCt) vorgesehen ist, der einen Teil der zweiten Meßelektrode (E2) in der Zone bedeckt, die den Feststoffelektrolyten (EL) bedeckt, wobei dieser Hohlraum über die Zugangsöffnung (G) mit der zu analysierenden Fluidmischung in Verbindung steht und eine Dicke besitzt, die eine Diffusion des Fluids eines molekularen Typs erlaubt, und daß die Schicht (S1) aus entglasbarem Email besteht.

**13.** Elektrochemische Sonde nach Anspruch 10, dadurch gekennzeichnet, daß die Dicke des Hohlraums zwischen 1 und 5 Mikrometer liegt.

**14.** Chromatograph, der nach dem Verfahren gemäß Anspruch 7 hergestellt ist, dadurch gekennzeichnet, daß er ein Substrat (Sa), eine dichte Schicht aus entglasbarem Email und einen Mikrokanal (SM) zur Durchleitung des Gases zwischen dem Substrat (Sa) und der Schicht aus entglasbarem Email aufweist.

# FIG.1

# FIG.2

# FIG.3

# FIG.4

# FIG.5

FIG. 6

EP 0 309 334 B1

# FIG.7

G
CCt
EL
E1/P1
S1
E2
SUBSTRAT
Sb

# FIG.8

E2    CCt    EL    E1/P1    S1    Sb

# FIG.9

Ca
EL
E1/P1
S1
E2
SUBSTRAT
Sb

FIG.10

SM

Sb

CD

SD

EG

FIG.11

RD

Sb

FIG.12

FIG.13

FIG.14

FIG.15

FIG.16

FIG.17

FIG.18

FIG.19

FIG.20

FIG.21

CB1  EM1  CB2  EM2  CB3  EM3  EN

Sb

FIG.22

EM1  EM2  EM3  EN

SM

Sb